# EUROPÄISCHE PATENTANMELDUNG

(11) **EP 4 497 352 A1**
(43) Veröffentlichungstag der Anmeldung: **29.01.2025**
(21) Anmeldenummer: 24185209.4
(22) Anmeldetag: 28.06.2024
(51) Int. Cl.: A47J 31/60, A47J 31/46

(54) **VERFAHREN ZUM REINIGEN EINES GETRÄNKEZUBEREITUNGSGERÄTS UND GETRÄNKEZUBEREITUNGSGERÄT**

(30) Priorität: 25.07.2023 BE 202305612
(71) Anmelder: Miele & Cie. KG, 33332 Gütersloh (DE)
(72) Erfinder: Tembaak, Jutta, 49492 Westerkappeln (DE); Last, Mario, 33739 Bielefeld (DE)

(57) **Zusammenfassung**

Ein Getränkezubereitungsgerät (100) umfasst einen Wassertank (115) zum Bevorraten von Wasser und eine Ausgabeeinheit (105) zum Ausgeben des Getränks. Das Getränkezubereitungsgerät (100) umfasst ferner ein Ventil (200), das ausgebildet ist, um in einer ersten Stellung eine Zuführleitung (205) zum Zuführen des Wassers aus dem Wassertank (115) zu dem Ventil (200) mit der Ausgabeeinheit (105) und in einer zweiten Stellung die Zuführleitung (205) mit einer Rückführleitung (220) zum Zurückführen des Wassers von dem Ventil (200) in den Wassertank (115) zu verbinden. Das Getränkezubereitungsgerät umfasst außerdem eine Pumpe (210) zum Fördern des Wassers aus dem Wassertank (115) über die Zuführleitung (205) zu dem Ventil (200) und einen Thermoblock (215) zum Erhitzen des Wassers in der Zuführleitung (205).

## Beschreibung

Der hier vorgestellte Ansatz betrifft ein Verfahren zum Reinigen eines Getränkezubereitungsgeräts sowie ein Getränkezubereitungsgerät, beispielsweise einen Kaffeevollautomaten.

Bei Festwassergeräten kann der Wassertank zur Reinigung zwar vom Kunden herausgenommen werden, wozu er in der Gebrauchsanleitung auch aufgefordert wird, die Erfahrung zeigt jedoch, dass die wenigsten Kunden von dieser Möglichkeit Gebrauch nehmen.

Dadurch, dass immer nur kaltes Wasser in den Wassertank gefüllt wird, besteht keinerlei Möglichkeiten einer Selbstreinigung des Wassertanks.

Die DE20312094 U1 befasst sich mit einer Reinigungstablette zum Reinigen einer Brühkammer eines Kaffeeautomaten.

Der hier vorgestellte Ansatz stellt sich die Aufgabe, ein verbessertes Verfahren zum Reinigen eines Getränkezubereitungsgeräts sowie ein verbessertes Getränkezubereitungsgerät zu schaffen.

Erfindungsgemäß wird diese Aufgabe durch ein Verfahren zum Reinigen eines Getränkezubereitungsgeräts sowie ein Getränkezubereitungsgerät mit den Merkmalen der Hauptansprüche gelöst. Vorteilhafte Ausgestaltungen und Weiterbildungen des hier vorgestellten Ansatzes ergeben sich aus den nachfolgenden Unteransprüchen.

Der hier vorgestellte Ansatz beruht auf der Erkenntnis, dass aus dem Wassertank entnommenes Wasser über eine Rückführleitung zurück in den Wassertank gefördert werden kann. Dadurch kann beispielsweise eine automatische Reinigung des Wassertanks oder eine Bereitstellung von warmen Wasser für Reinigungsprozesse ermöglicht werden. Vorteilhafterweise lässt sich dadurch eine gute Reinigung bzw. Hygiene des Getränkezubereitungsgeräts erreichen.

Ein Getränkezubereitungsgerät zum Zubereiten zumindest eines Getränks umfasst einen Wassertank zum Bevorraten von Wasser und eine Ausgabeeinheit zum Ausgeben des Getränks. Auch umfasst das Getränkezubereitungsgerät ein Ventil, das ausgebildet ist, um in einer ersten Stellung eine Zuführleitung zum Zuführen des Wassers aus dem Wassertank zu dem Ventil mit der Ausgabeeinheit und in einer zweiten Stellung die Zuführleitung mit einer Rückführleitung zum Zurückführen des Wassers von dem Ventil in den Wassertank zu verbinden. Das Getränkezubereitungsgerät umfasst zudem eine Pumpe zum Fördern des Wassers aus dem Wassertank über die Zuführleitung zu dem Ventil sowie einen Thermoblock zum Erhitzen des Wassers in der Zuführleitung.

Unter einem Getränkezubereitungsgerät kann ein Gerät wie etwa eine Kaffeemaschine, ein Kaffeeautomat oder ein Kaffeevollautomat zum Zubereiten und Bereitstellen eines Getränks, insbesondere eines Heißgetränks wie Kaffee, Tee oder Suppe, verstanden werden. Derartige Getränke können zumeist wasserbasiert sein und daher Wasser für deren Zubereitung erfordern. Um Wasser im Getränkezubereitungsgerät vorzuhalten, kann das Getränkezubereitungsgerät einen Wassertank aufweisen. Unter Verwendung der Pumpe kann das Wasser aus dem Wassertank über die Zuführleitung zu dem Thermoblock bzw. einem Durchlauferhitzer gefördert werden, in welchem das Wasser erhitzt werden kann, das sich in der Zuführleitung befindet. Nach dem Erhitzen des Wassers kann das Wasser je nach Ventilstellung des Ventils entweder zu der Ausgabeeinheit oder beispielsweise zurück in den Wassertank gefördert werden. Über die Ausgabeeinheit kann zum Beispiel ein zubereitetes Getränk an einen Benutzer des Getränkezubereitungsgeräts ausgegeben werden. Wenn das Wasser dagegen zurück in den Wassertank geführt wird, kann der Wassertank gereinigt werden.

Ein Verfahren zum Reinigen eines Getränkezubereitungsgeräts umfasst einen Schritt des Bereitstellens eines Schaltsignals an eine Schnittstelle zu dem Ventil, um das Ventil in die zweite Stellung zu versetzen und einen Schritt des Bereitstellens eines Pumpsignals an eine Schnittstelle zu der Pumpe, um die Pumpe zu aktivieren. Das Verfahren umfasst außerdem einen Schritt des Bereitstellens eines Thermosignals an eine Schnittstelle zu dem Thermoblock, um den Thermoblock zu aktivieren.

Gemäß einer Ausführungsform kann das in den Wassertank zurückgeführte Wasser so weit erhitzt werden, dass der Wassertank mit dem erhitzten Wasser gereinigt werden kann. Beispielsweise kann dadurch die Bildung eines Biofilms oder Algen im Wassertank verhindert werden. Vorteilhafterweise kann dadurch eine automatische oder automatisierte Reinigung des Wassertanks durchgeführt werden. Beispielsweise kann das Wasser dazu auf eine Solltemperatur von beispielhaft 60 Grad Celsius erhitzt werden. Anschließend kann das Ventil in eine dritte Stellung versetzt werden, durch die das zum Reinigen verwendete Wasser aus dem Wassertank aus dem Getränkezubereitungsgerät abgeschieden werden kann.

Gemäß einer Ausführungsform kann das Verfahren dazu einen Schritt des Bereitstellens eines Stoppsignals an die Schnittstelle zu der Pumpe, um die Pumpe zu deaktivieren, einen Schritt des Bereitstellens eines Ausschaltsignals an die Schnittstelle zu dem Thermoblock, um den Thermoblock zu deaktivieren, einen weiteren Schritt des Bereitstellens des Pumpsignals an die Schnittstelle zu der Pumpe, um die Pumpe zu aktivieren, und einen Schritt des Bereitstellens eines weiteren Schaltsignals an die Schnittstelle zu dem Ventil, um das Ventil in eine dritte Stellung zu versetzen, in der das Ventil die Zuführleitung mit einem Auslass zu einer Abtropfschale des Getränkezubereitungsgeräts verbindet, umfassen. Der Auslass zu der Abtropfschale ist dadurch vorteilhaft, dass das Wasser zum Beispiel auf diesem Wege aus dem Getränkezubereitungsgerät herausgeführt bzw. entsorgt werden kann, vor allem wenn das Wasser dem Getränkezubereitungsgerät nicht oder nicht mehr für eine Zubereitung eines Getränks zur Verfügung stehen braucht.

Gemäß einer weiteren Ausführungsform des Verfahrens kann der Schritt des Bereitstellens des Stoppsignals, der Schritt des Bereitstellens des Ausschaltsignals und der Schritt des Bereitstellens des weiteren Schaltsignals durchgeführt werden, wenn das Wasser eine Solltemperatur aufweist. Gemäß dieser Ausführungsform braucht der Benutzer die Solltemperatur des Wassers nicht überwachen oder beobachten, da das Getränkezubereitungsgerät die Solltemperatur automatisch regulieren kann.

Gemäß einer Ausführungsform des Verfahrens kann der weitere Schritt des Bereitstellens des Pumpsignals eine vorbestimmte Wartezeit nach dem Schritt des Bereitstellens des Stoppsignals durchgeführt werden. Dadurch kann erreicht werden, dass das Wasser, nachdem die Pumpe ausgeschaltet, also deaktiviert, wurde, innerhalb der vorbestimmten Wartezeit von beispielsweise einer Minute die Möglichkeit hat einzuwirken. Nach Ablauf dieser Wartezeit kann die Pumpe erneut anlaufen, also aktiviert werden.

Gemäß einer Ausführungsform kann das in den Wassertank zurückgeführte Wasser so weit temperiert werden, dass es eine zum Auflösen einer Reinigungstablette geeignet Temperatur aufweist. Eine solche automatische Temperierung ist vorteilhaft, da jeder Mensch ein anderes Temperaturempfinden hat, wodurch eine manuelle Einstellung der Temperatur schwierig ist. Durch die automatische Temperierung kann vermieden werden, dass der Reinigungsprozess mit zu geringen Konzentrationen oder mit geschädigtem Reinigungsmittel erfolgt oder das Fluidsystem durch nicht aufgelösten Reiniger verstopft.

Dazu kann das Verfahren einen Schritt des Bereitstellens eines Stoppsignals an die Schnittstelle zu der Pumpe umfassen, um die Pumpe zu deaktivieren, einen Schritt des Bereitstellens eines Ausschaltsignals an die Schnittstelle zu dem Thermoblock umfassen, um den Thermoblock zu deaktivieren und einen Schritt des Ausgebens eines Anzeigesignals an eine Schnittstelle zu einer Anzeigeeinheit des Getränkezubereitungsgeräts umfassen, um die Anzeigeeinheit zum Anzeigen einer Aufforderung zum Eingeben eines Reinigungsmittels in das Getränkezubereitungsgerät anzusteuern. Das Getränkezubereitungsgerät kann beispielhaft eine Meldung oder Aufforderung an einen Benutzer des Getränkezubereitungsgeräts ausgeben, welche beispielsweise besagen kann, dass der Benutzer Reiniger in den Tank einfüllen solle. Wenn die Anzeigeeinheit eine derartige Aufforderung anzeigt, kann der Benutzer einfach und schnell Kenntnis von dieser Aufforderung nehmen und dementsprechend Reinigungsmittel in das Getränkezubereitungsgerät eingeben. Vorteilhafterweise weist das zum Auflösen des Reinigungsmittels verwendete Wasser dabei bereits eine optimale Temperatur auf.

Entsprechend kann der Schritt des Bereitstellens des Stoppsignals, der Schritt des Bereitstellens des Ausschaltsignals und der Schritt des Ausgebens des Anzeigesignals durchgeführt werden, wenn das Wasser eine Reinigungstemperatur aufweist. Hierdurch kann erreicht werden, dass die Pumpe und der Thermoblock ausgeschaltet werden können und der Benutzer zum Eingeben des Reinigungsmittels in das Getränkezubereitungsgerät aufgefordert oder angeregt werden kann, wenn das Wasser die vorbestimmte Reinigungstemperatur erreicht oder erreicht hat, die sich zum Auflösen des Reinigungsmittels und/oder sich zum Durchführen des Reinigungsprozesses eignet.

Gemäß einer Ausführungsform kann das Verfahren einen Schritt des Einlesens eines Eingabesignals, das ein erfolgtes Eingeben des Reinigungsmittels anzeigt, und einen weiteren Schritt des Bereitstellens des Pumpsignals eine vorbestimmte Auflösezeit nach dem Schritt des Einlesens des Eingabesignals umfassen, um einen Reinigungsprozess zu starten. Diese Ausführungsform bietet dem Benutzer die Möglichkeit, das erfolgte Eingeben des Reinigungsmittels komfortabel und benutzerfreundlich zu erkennen. Innerhalb der Auflösezeit von lediglich beispielhaft einiger Minuten, welche das Gerät automatisch einhält, kann sich das Reinigungsmittel, im Speziellen in Form einer Tablette oder Reinigungstablette, im Wasser auflösen. Durch eine Einhaltung der Auflösezeit kann optimalerweise ein vollständiges Auflösen der Tablette und eine vorteilhafte Wirkung einer beispielsweise hierdurch entstehenden Reinigerlösung erzielt oder unter Umständen sogar sichergestellt werden. Im Anschluss an diese Auflösezeit kann insbesondere die Pumpe eingeschaltet werden, indem das Pumpsignal bereitgestellt wird, und der Reinigungsprozess kann beginnen.

Gemäß einer Ausführungsform kann das Verfahren einen Schritt des Einlesens eines Temperatursignals über eine Schnittstelle zu einem Temperatursensor des Getränkezubereitungsgeräts umfassen. Hierbei kann das Temperatursignal eine Temperatur des Wassers in dem Wassertank repräsentieren und unter Verwendung des Temperatursensors kann diese Wassertemperatur überwacht werden. Beispielsweise kann die Temperatur dazu in der Zuführleitung erfasst werden. Bei dieser Ausführungsform kann es sich als vorteilhaft erweisen, dass der Reinigungsprozess in Form eines Kreislaufs beispielsweise so lange wiederholt werden kann, bis das Wasser die Solltemperatur aufweist.

Der hier vorgestellte Ansatz schafft ferner eine Steuereinheit, die ausgebildet ist, um die Schritte einer Variante des hier vorgestellten Verfahrens in entsprechenden Einheiten durchzuführen, anzusteuern bzw. umzusetzen. Die Steuereinheit kann ausgebildet sein, um Eingangssignale einzulesen und unter Verwendung der Eingangssignale Ausgangssignale zu bestimmen und bereitzustellen. Ein Eingangssignal kann beispielsweise ein über eine Eingangsschnittstelle der Steuereinheit einlesbares Sensorsignal darstellen. Ein Ausgangssignal kann ein Steuersignal oder ein Datensignal darstellen, das an einer Ausgangsschnittstelle der Steuereinheit bereitgestellt werden kann. Die Steuereinheit kann ausgebildet sein, um die Ausgangssignale unter Verwendung einer in Hardware oder Software umgesetzten Verarbeitungsvorschrift zu bestimmen. Beispielsweise kann die Steuereinheit dazu eine Logikschaltung, einen integrierten Schaltkreis oder ein Softwaremodul umfassen und beispielsweise als ein diskretes Bauelement realisiert sein oder von einem diskreten Bauelement umfasst sein. Auch durch diese Ausführungsvariante des hier vorgestellten Ansatzes in Form einer Steuereinheit kann die dem hier vorgestellten Ansatz zugrunde liegende Aufgabe schnell und effizient gelöst werden.

Von Vorteil ist auch ein Computer-Programmprodukt oder Computerprogramm mit Programmcode, der auf einem maschinenlesbaren Träger oder Speichermedium wie einem Halbleiterspeicher, einem Festplattenspeicher oder einem optischen Speicher gespeichert sein kann. Wird das Programmprodukt oder Programm auf einem Computer oder einer Steuereinheit ausgeführt, so kann das Programmprodukt oder Programm zur Durchführung, Umsetzung und/oder Ansteuerung der Schritte des Verfahrens nach einer der hier beschriebenen Ausführungsformen verwendet werden.

Gemäß einer weiteren Ausführungsform kann ein Getränkezubereitungsgerät die obig vorgestellte Steuereinheit oder eine ähnliche Steuereinheit umfassen. In dem Getränkezubereitungsgerät kann eine Ausführungsform der obig präsentierten Steuereinheit vorteilhaft eingesetzt oder verwendet werden, um das Getränkezubereitungsgerät zu reinigen bzw. zu entkalken. Auch durch diese Ausführungsvariante des hier vorgestellten Ansatzes in Form eines Getränkezubereitungsgeräts kann die dem hier vorgestellten Ansatz zugrunde liegende Aufgabe schnell und effizient gelöst werden.

Auch wenn der beschriebene Ansatz anhand eines Haushaltgeräts beschrieben wird, kann der hier beschriebene Ansatz entsprechend im Zusammenhang mit einem gewerblichen oder professionellen Gerät eingesetzt werden.

Ausführungsbeispiele des hier vorgestellten Ansatzes sind in den Zeichnungen rein schematisch dargestellt und werden nachfolgend näher beschrieben. Es zeigt
Figur 1 eine Darstellung eines Getränkezubereitungsgeräts gemäß einem Ausführungsbeispiel;
Figur 2 ein Blockschaltbild eines Getränkezubereitungsgeräts gemäß einem Ausführungsbeispiel;
Figur 3 ein Blockschaltbild eines Getränkezubereitungsgeräts gemäß einem Ausführungsbeispiel;
Figur 4 ein Ablaufdiagramm eines Ausführungsbeispiels des hier vorgestellten Verfahrens zum Reinigen eines Getränkezubereitungsgeräts;
Figur 5 ein Ablaufdiagramm eines Ausführungsbeispiels des hier vorgestellten Verfahrens zum Reinigen eines Getränkezubereitungsgeräts; und
Figur 6 ein Ablaufdiagramm eines Ausführungsbeispiels des hier vorgestellten Verfahrens zum Reinigen eines Getränkezubereitungsgeräts.

Gleiche oder ähnliche Bezugszeichen werden in der nachfolgenden Beschreibung für gleiche oder ähnliche Elemente verwendet, wobei auf eine wiederholte Erläuterung der Funktion dieser Elemente aus Gründen der Übersichtlichkeit verzichtet wird.

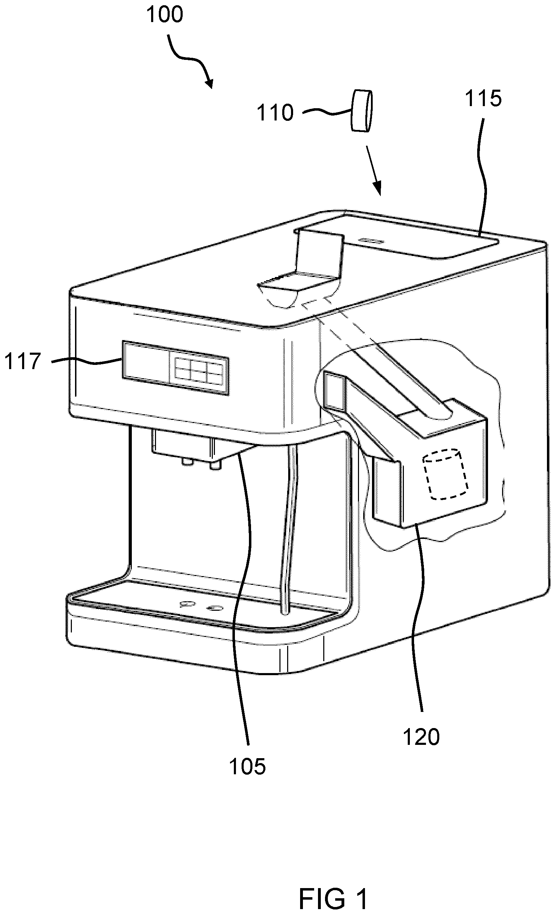

Figur 1 zeigt eine Darstellung eines Getränkezubereitungsgeräts 100 gemäß einem Ausführungsbeispiel. Beispielshaft ist das Getränkezubereitungsgerät 100 als ein Kaffeevollautomat zum Zubereiten von Kaffee ausgeführt. Das Getränkezubereitungsgerät 100 weist eine Ausgabeeinheit 105 zum Ausgeben eines Getränks nach dessen Zubereitung auf. Beispielsweise kann über die Ausgabeeinheit 105 neben Kaffee auch Dampf für zu Zubereitung von Milchschaum und Heißwasser ausgegeben werden. Die Ausgabeeinheit 105 ist so angeordnet, dass ein Nutzer eine Tasse unter die Ausgabeeinheit 105 stellen kann.

In Figur 1 ist ein zum Reinigen des Getränkezubereitungsgeräts 100 vorgesehenes Reinigungsmittel 110, hier in Form einer Reinigungstablette, dargestellt.

Gemäß einem Ausführungsbeispiel wird das Reinigungsmittel 110 von einem Nutzer in einen Wassertank 115 des Getränkezubereitungsgeräts 100 eingegeben. Dazu kann der Nutzer unter Verwendung einer Anzeigeeinheit 117 aufgefordert werden. Beispielsweise kann der Wassertank 115 und das Getränkezubereitungsgerät 100 unter Verwendung des in den Wassertank 115 eingegebenen Reinigungsmittels 110 entkalkt werden.

Gemäß einem Ausführungsbeispiel wird das Reinigungsmittel 110 von dem Nutzer über einen Zuführschacht in eine Brüheinheit 120 des Getränkezubereitungsgerät 100 eingegeben. Beispielsweise kann die Brüheinheit 120 unter Verwendung des Reinigungsmittels 110 sowie aus dem Wassertank 115 gefördertem Wasser entfettet werden.

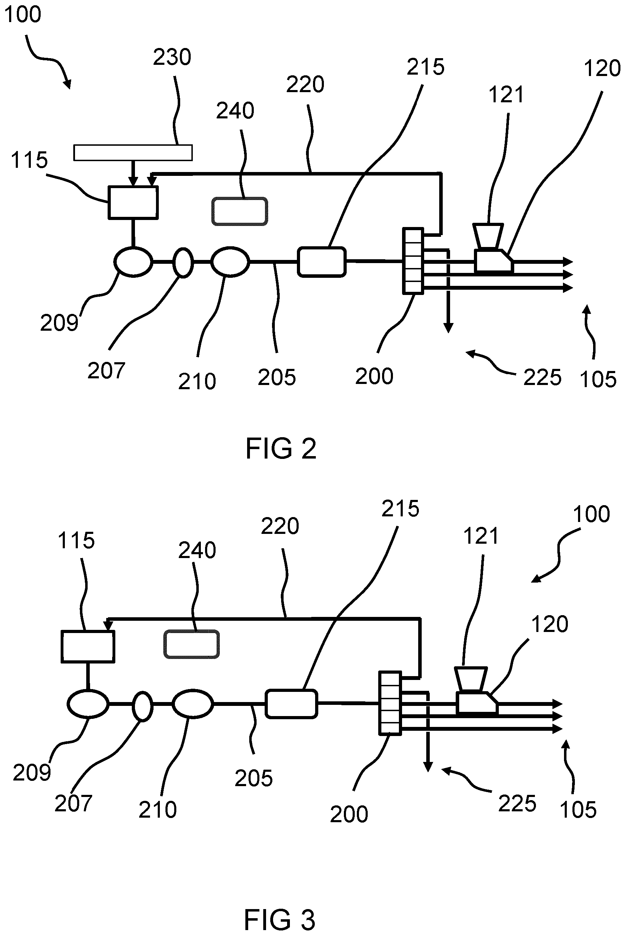

Figur 2 zeigt ein Blockschaltbild eines Getränkezubereitungsgeräts 100 gemäß einem Ausführungsbeispiel. Beispielsweise handelt es sich dabei um ein Getränkezubereitungsgerät mit einer Ausgabeeinheit 105, einem Wassertank 115 und einer Brüheinheit 120, optional mit Mahlwerk 121 wie es anhand von Figur 1 beschrieben ist.

Der Wassertank 115 ist über eine Zuführleitung 205 mit einem Ventil 200 verbunden, über das aus dem Wassertank 115 gefördertes Wasser je nach Ventilstellung beispielsweise zu der Ausgabeeinheit 105 oder über eine Rückführleitung 220 zurück in den Wassertank gefördert werden kann. Beispielsweise weist das Ventil 200 eine erste Stellung auf, in der die Zuführleitung 205 mit der Ausgabeeinheit 105 verbunden ist und eine zweite Stellung auf, in der die Zuführleitung 205 mit der Rückführleitung 220 verbunden ist. Optional weist das Ventil 200 eine dritte Stellung auf, in der die Zuführleitung 205 mit einer Abtropfschale 225 verbunden ist.

Beispielsweise ist die Zuführleitung 205 in der ersten Ventilstellung über die Brüheinheit 120 mit der Ausgabeeinheit 105 verbunden, um Kaffee auszugeben, in einer weiteren ersten Ventilstellung mit der Ausgabeeinheit 105 verbunden, um Dampf für Milch auszugeben und in einer zusätzlichen ersten Ventilstellung mit der Ausgabeeinheit 105 verbunden, um Heißwasser auszugeben.

Gemäß einem Ausführungsbeispiel ist eine Pumpe 210 vorgesehen, um das Wasser aus dem Wassertank 115 über die Zuführleitung 205 zu dem Ventil 200 zu fördern. Ferner ist ein Thermoblock 215 vorgesehen, um das durch die Zuführleitung 205 geförderte Wasser zu erhitzen.

Gemäß einem Ausführungsbeispiel überwacht ein Temperatursensor 207 eine Temperatur des Wassers in dem Wassertank 115. Dazu ist der Temperatursensor 207 beispielhaft an der Zuführleitung 205 in der Nähe einer Schnittstelle zwischen dem Wassertank 115 und der Zuführleitung 205 angeordnet. Optional ist in der Zuführleitung 205 ein Filtermodul 209 angeordnet.

Gemäß einem Ausführungsbeispiel handelt es sich bei dem Getränkezubereitungsgerät 100 um ein Festwassergerät. Dabei wird der Wassertank 115 durch einen Festwasseranschluss 230 gespeist. Typischerweise kann der Wassertank 115 beispielsweise zur Reinigung von dem Nutzer herausgenommen werden, wozu er in Gebrauchsanweisungen auch aufgefordert wird. Erfahrungsgemäß machen jedoch nicht alle Benutzer von dieser Möglichkeit Gebrauch. Dadurch, dass zumeist nur kaltes Wasser in den Wassertank 115 gefüllt wird, besteht nur eine geringe Möglichkeit einer Selbstreinigung des Wassertanks 115.

Durch das gezeigte Fluidsystem des Getränkezubereitungsgeräts 100 wird ein Reinigungskreislauf für den Wassertank 115 geschaffen.

Gemäß einem Ausführungsbeispiel läuft dazu Wasser aus dem Wassertank 115 durch den Thermoblock 215, wird beispielhaft auf min 60 °C aufgeheizt und über das Ventil 200 und die Rückführleitung 220 wieder zurück in den Wassertank 115 gedrückt.

Anschließend schließt die Pumpe 210 und das heiße Wasser kann einwirken.

Nach ca. 1 min läuft die Pumpe 210 erneut an. Das Ventil 200 schaltet auf die Abtropfschale 225. Dadurch wird das Wasser aus dem Wassertank 115 in der Abtropfschale 225 entsorgt.

Dieser Prozess kann mehrfach wiederholt werden. Durch den Festwasseranschluss 230 kann frisches Wasser zur weiteren Reinigung nachgefüllt werden.

Gemäß einem Ausführungsbeispiel wird ein regelmäßiges thermisches Pflegeprogramm durchgeführt. Dabei wird das erhitzte Wasser beispielsweise 10 Minuten lang durch den Wassertank 115 zirkuliert und dabei wird immer wieder nachgeheizt.

Gemäß einem Ausführungsbeispiel wird das in Figur 3 dargestellte Fluidsystem für einen optimalen Reinigungsprozess verwendet.

Vor dem Reinigungsprozess wird der Wassertank 115 automatisch in die Abtropfschale 225 entleert.

Danach wird der Wassertank 115 automatisch mit der richtigen Menge Frischwasser zur Reinigung oder Entkalkung gefüllt.

Nun schaltet die Pumpe 210 ein, das Ventil 200 schaltet auf Wassertank-Kreislauf. Das Wasser wird durch den Thermoblock 215 auf die richtige Temperatur gebracht und fließt dann zurück in den Wassertank 215.

Der Nutzer entnimmt den Wassertank 215 und wirft eine Reinigungstablette hinein. Danach setzt er den Tank 215 wieder ins Gerät 100.

Nach einer Auflösezeit von ca. 2 min, die das Gerät 100 automatisch einhält, startet der Reinigungsprozess.

Nach dem Reinigungsprozess kann der Wassertank 215 wie auf der vorigen Seite automatisch gespült werden und ist dann wieder bereit zur Getränkezubereitung.

Gemäß einem Ausführungsbeispiel werden Schritte des Reinigungsprozesses unter Verwendung einer Steuereinheit 240 gesteuert, die beispielsweise Steuersignale an die Pumpe 210, den Thermoblock 215 und das Ventil 200 sowie optional an eine Anzeigeeinheit ausgeben kann und beispielsweise ein Sensorsignal von dem Temperatursensor 207 einlesen kann.

Figur 3 zeigt ein Blockschaltbild eines Getränkezubereitungsgeräts 100 gemäß einem Ausführungsbeispiel. Das Getränkezubereitungsgeräts 100 entspricht dem in Figur 2 gezeigten Getränkezubereitungsgerät, allerdings wird der Wassertank 115 nicht durch einen Festwasseranschluss gespeist, sondern der Nutzer befüllt den Wassertank 115 mit Wasser.

Gemäß einem Ausführungsbeispiel wird das in Figur 3 dargestellte Fluidsystem für einen optimalen Reinigungsprozess ohne Festwasser verwendet.

Der Nutzer füllt den Wassertank 115 beispielsweise mit 300 ml Wasser und setzt ihn wieder ins Gerät 100.

Nun schaltet die Pumpe 210 ein, das Ventil 200 schaltet auf Wassertank-Kreislauf. Das Wasser wird durch den TB auf die richtige Temperatur gebracht und fließt dann zurück in den Wassertank 115.

Der Kunde entnimmt den Wassertank 115 und wirft eine Reinigungstablette hinein. Danach setzt er den Tank 115 wieder ins Gerät 100.

Nach einer Auflösezeit von beispielsweise ca. 2 min, die das Gerät 100 automatisch einhält, startet der Reinigungsprozess.

Nach dem Reinigungsprozess entnimmt der Kunde den Tank 115, entleert und spült ihn und setzt ihn gefüllt wieder in das Gerät 100. Die Getränkezubereitung kann beginnen.

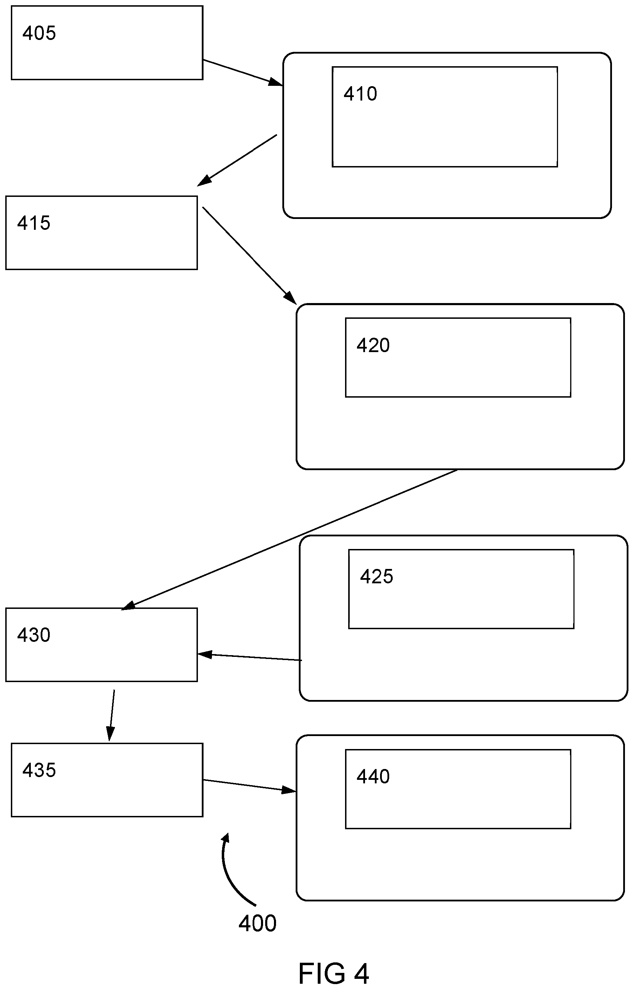

Figur 4 zeigt ein Ablaufdiagramm eines Ausführungsbeispiels des hier vorgestellten Verfahrens 400 zum Reinigen eines Getränkezubereitungsgeräts, wie es beispielsweise anhand der vorangegangenen Figuren beschrieben ist.

Dieses Reinigen wird mittels eines Reinigungsprogramms durchgeführt. Gemäß einem Ausführungsbeispiel handelt es sich bei dem Verfahren 400 um ein regelmäßiges thermisches Pflegeprogramm, also Reinigungsprogramm. Hierbei wird erhitztes Wasser 10 Minuten durch den Wassertank zirkuliert, also umgewälzt, und dabei immer wieder nachgeheizt. In einem Schritt 405 wird Wasser erhitzt und gepumpt (englisch heat and pump Water). In einem Schritt 410 erhält der Benutzer auf einer Anzeigeeinheit des Getränkezubereitungsgeräts eine Meldung, die besagt, dass das Wasser gerade erhitzt wird (engl. Water heating in progress) und dass der Benutzer bitte warten solle (engl. Please Wait). In einem Schritt 415 wird eine Wassertemperatur ermittelt (engl. Sense Water Temperature). In einem Schritt 420 erhält der Benutzer auf der Anzeigeeinheit eine Meldung, die besagt, dass die Wassertemperatur in Ordnung ist und dass er ein Reinigungsmittel eingeben solle (engl. T ok, insert Tab). Auch bietet sich dem Benutzer gemäß dieser Meldung die Möglichkeit, durch Betätigen einer Taste, eines Tasters, eines Bedienfelds oder Ähnlichem das Reinigungsprogramm fortzusetzen (engl. Continue Care Action bzw. continue). In einem fakultativen Schritt 425 erhält der Benutzer auf der Anzeigeeinheit eine Meldung, die besagt, dass das Reinigungsprogramm gerade durchgeführt wird (engl. Care Action in progress) und dass der Benutzer bitte warten solle (engl. please wait). In einem Schritt 430 wird das Reinigungsprogramm ausgeführt (engl. Execute Care Program). In einem Schritt 435 wird das Reinigungsprogramm beendet (engl. End). In einem Schritt 440 erhält der Benutzer auf der Anzeigeeinheit eine Meldung, die besagt, dass das Reinigungsprogramm beendet wurde (engl. care action finished). Auch bietet sich dem Benutzer gemäß dieser Meldung die Möglichkeit, durch Betätigen einer Taste, eines Tasters, eines Bedienfelds oder Ähnlichem zum Startmenü zurückzukehren (engl. Start Menue).

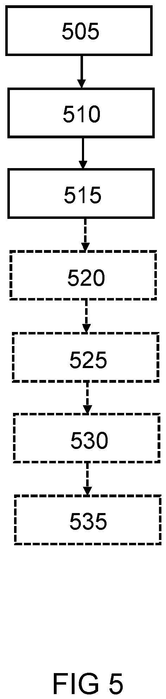

Figur 5 zeigt ein Ablaufdiagramm eines Ausführungsbeispiels des hier vorgestellten Verfahrens zum Reinigen eines Getränkezubereitungsgeräts wie es anhand der vorangegangenen Figuren beschrieben ist. Beispielsweise wird dabei ein Reinigungsprogramm durchgeführt, wie es anhand von Figur 4 beschrieben ist.

Zunächst wird das Wasser aus dem Wassertank kontinuierlich umgewälzt, um es für den Reinigungsprozess geeignet zu temperieren. Gemäß diesem Ausführungsbeispiel wird das Wasser sehr stark erhitzt, um den Wassertank zu reinigen.

Dazu wird in einem Schritt 505 ein Schaltsignal an eine Schnittstelle zu dem Ventil des Getränkezubereitungsgeräts bereitgestellt. Dadurch wird das Ventil in die zweite Stellung versetzt, in der die Zuführleitung mit der Rückführleitung verbunden ist. In einem Schritt 510 ein Pumpsignal an eine Schnittstelle zu der Pumpe bereitgestellt, um die Pumpe zum Fördern des Wassers aus dem Wassertank zu dem Ventil zu aktivieren. In einem Schritt 515 wird ein Thermosignal an eine Schnittstelle zu dem Thermoblock bereitgestellt, um den Thermoblock zum Erhitzen des Wassers in der Zuführleitung zu aktivieren. Wasser aus dem Wassertank läuft durch den Thermoblock, wird zum Beispiel mindestens auf 60 Grad Celsius aufgeheizt und wieder zurück in den Wassertank gedrückt. Das Schaltsignal, das Pumpsignal und das Thermosignal werden beispielsweise von einer Steuereinheit des Getränkezubereitungsgeräts bereitgestellt.

Nachdem das Wasser in dem Wassertank ausreichend erhitzt ist, wird in einem Schritt 520 ein Stoppsignal an die Schnittstelle zu der Pumpe bereitgestellt, um die Pumpe zu deaktivieren. Dadurch kann das heiße Wasser einwirken. In einem Schritt 525 wird ein Ausschaltsignal an die Schnittstelle zu dem Thermoblock bereitgestellt, um den Thermoblock zu deaktivieren. Gemäß einem Ausführungsbeispiel werden die Schritt 520, 525 durchgeführt, wenn das Wasser eine Solltemperatur aufweist, beispielsweise wenn das Wasser eine Solltemperatur von 60 Grad Celsius aufweist. In einem Schritt 530 wird das Pumpsignal an die Schnittstelle zu der Pumpe bereitgestellt, um die Pumpe erneut zu aktivieren. Die Pumpe läuft zum Beispiel nach circa einer Minute erneut an, wird also erneut aktiviert. Gemäß einem Ausführungsbeispiel wird der weitere Schritt 530 des Bereitstellens des Pumpsignals eine vorbestimmte Wartezeit, lediglich beispielhaft eine Minute, nach dem Schritt des Bereitstellens des Stoppsignals durchgeführt. In einem Schritt 535 wird ein weiteres Schaltsignal an die Schnittstelle zu dem Ventil bereitgestellt, um das Ventil in eine dritte Stellung zu versetzen, in der das Ventil die Zuführleitung mit einem Auslass zu einer Abtropfschale des Getränkezubereitungsgeräts verbindet. Dadurch kann das zum Reinigen verwendete Wasser in der Abtropfschale entsorgt werden.

Das Verfahren eignet sich insbesondere bei Festwassergeräten, bei denen der Wassertank zur Reinigung zwar vom Nutzer herausgenommen werden kann, wozu er in der Gebrauchsanleitung auch aufgefordert wird. Durch die hier beschriebene Selbstreinigung des Wassertanks wird die Bildung eines Biofilms vermieden, wenn der Wassertank nicht regelmäßig gereinigt wird.

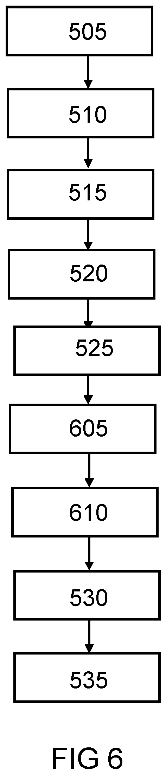

Figur 6 zeigt ein Ablaufdiagramm eines Ausführungsbeispiels eines Verfahrens zum Reinigen eines Getränkezubereitungsgeräts wie es anhand der vorangegangenen Figuren beschrieben ist. Beispielsweise wird dabei ein Reinigungsprogramm durchgeführt, wie es anhand von Figur 4 beschrieben ist.

Gemäß diesem wird das Wasser im Unterschied zu dem anhand von Figur 5 beschriebenen Verfahren nur lauwarm erhitzt, um das Getränkezubereitungsgerät unter Verwendung eines Reinigungsmittels reinigen zu können.

Dieses Verfahren eignet sich insbesondere, um Kaffeevollautomaten zu entkalken oder die Brüheinheit und das Milchsystem zu reinigen. Dazu wird der Nutzer aufgefordert, die jeweilige Tablette in dem Wassertank aufzulösen. Die Reinigungsmittel lösen sich nur bei bestimmten Temperaturen richtig auf und reagieren auf zu heiße Temperaturen empfindlich (Zerstörung bestimmter Inhaltsstoffe). Durch das hier vorgestellte Verfahren kann beispielsweise eine dafür optimale Temperatur zwischen 30 und 40 °C des Wassers im Wassertank eingestellt werden. Durch ein solches Temperieren des Frischwassers wird eine optimale, homogene Reinigungslösung mit bestmöglicher Reinigungswirkung erreicht.

Dazu wird das Wasser aus dem Wassertank kontinuierlich umgewälzt, um es für den Reinigungsprozess geeignet zu temperieren. Dazu werden die anhand von Figur 5 beschriebenen Schritte 505, 510, 515 durchgeführt, um das Wasser in dem Wassertank beispielsweise handwarm zu erhitzen. Anschließend wird in den Schritten 520, 525 das Stoppsignal an die Schnittstelle zu der Pumpe bereitgestellt, um die Pumpe zu deaktivieren und das Ausschaltsignal an die Schnittstelle zu dem Thermoblock bereitgestellt, um den Thermoblock zu deaktivieren. Gemäß einem Ausführungsbeispiel werden die Schritt 520, 525 durchgeführt, wenn das Wasser eine Reinigungstemperatur aufweist, beispielsweise wenn das Wasser handwarm erwärmt ist.

Anschließend wird in einem Schritt 605 ein Anzeigesignal an eine Schnittstelle zu einer Anzeigeeinheit des Getränkezubereitungsgeräts ausgegeben, um die Anzeigeeinheit zum Anzeigen einer Aufforderung zum Eingeben eines Reinigungsmittels in das Getränkezubereitungsgerät anzusteuern. Zwecks des Eingebens des Reinigungsmittels kann der Benutzer den Wassertank, oder kurz Tank, entnehmen und Reinigungsmittel hineineingeben. Danach setzt er den Wassertank wieder ins Gerät. In einem Schritt 610 wird ein Eingabesignal eingelesen, das ein erfolgtes Eingeben des Reinigungsmittels anzeigt.

In dem Schritt 530 wird das Pumpsignal an die Schnittstelle zu der Pumpe bereitgestellt, um die Pumpe erneut zu aktivieren. Die Pumpe läuft zum Beispiel nach circa einer Minute erneut an, wird also erneut aktiviert. Gemäß einem Ausführungsbeispiel wird der weitere Schritt 530 des Bereitstellens des Pumpsignals eine vorbestimmte Auflösezeit, lediglich beispielhaft zwei Minuten, nach dem Schritt 520 des Bereitstellens des Stoppsignals durchgeführt. Optional wird dabei in dem Schritt 535 das weitere Schaltsignal an die Schnittstelle zu dem Ventil bereitgestellt, um das Ventil in die dritte Stellung zu versetzen, in der das Ventil die Zuführleitung mit einem Auslass zu einer Abtropfschale des Getränkezubereitungsgeräts verbindet. Dadurch kann das zum Reinigen verwendete Wasser in der Abtropfschale entsorgt werden.

## Patentansprüche

1. Verfahren zum Reinigen eines Getränkezubereitungsgeräts (100), das einen Wassertank (115) zum Bevorraten von Wasser, eine Ausgabeeinheit (105) zum Ausgeben des Getränks, ein Ventil (200) mit einer ersten Stellung zum Verbinden einer Zuführleitung (205) zum Zuführen des Wassers aus dem Wassertank (115) zu dem Ventil (200) mit der Ausgabeeinheit (105) und mit einer zweiten Stellung zum Verbinden einer Rückführleitung (220) zum Zurückführen des Wassers von dem Ventil (200) in den Wassertank (115), eine Pumpe (210) zum Fördern des Wassers aus dem Wassertank (115) über die Zuführleitung (205) zu dem Ventil (200) und einen Thermoblock (215) zum Erhitzen des Wassers in der Zuführleitung (205) aufweist, und wobei das Verfahren (500) die folgenden Schritte umfasst:
Bereitstellen (505) eines Schaltsignals an eine Schnittstelle zu dem Ventil, um das Ventil in die zweite Stellung zu versetzen;
Bereitstellen (510) eines Pumpsignals an eine Schnittstelle zu der Pumpe, um die Pumpe zum Fördern des Wassers aus dem Wassertank zu dem Ventil zu aktivieren; und
Bereitstellen (515) eines Thermosignals an eine Schnittstelle zu dem Thermoblock, um den Thermoblock zum Erhitzen des Wassers in der Zuführleitung zu aktivieren.

2. Verfahren gemäß Anspruch 1, mit einem Schritt (520) des Bereitstellens eines Stoppsignals an die Schnittstelle zu der Pumpe, um die Pumpe zu deaktivieren, einem Schritt (525) des Bereitstellens eines Ausschaltsignals an die Schnittstelle zu dem Thermoblock, um den Thermoblock zu deaktivieren, einem weiteren Schritt (530) des Bereitstellens des Pumpsignals an die Schnittstelle zu der Pumpe, um die Pumpe zu aktivieren und einem Schritt (535) des Bereitstellens eines weiteren Schaltsignals an die Schnittstelle zu dem Ventil, um das Ventil in eine dritte Stellung zu versetzen, in der das Ventil die Zuführleitung mit einem Auslass zu einer Abtropfschale des Getränkezubereitungsgeräts verbindet.

3. Verfahren gemäß Anspruch 2, bei dem der Schritt (520) des Bereitstellens des Stoppsignals, der Schritt (525) des Bereitstellens des Ausschaltsignals und der Schritt (535) des Bereitstellens des weiteren Schaltsignals durchgeführt werden, wenn das Wasser eine Solltemperatur aufweist.

4. Verfahren gemäß Anspruch 1 oder 2, bei dem der weitere Schritt (530) des Bereitstellens des Pumpsignals eine vorbestimmte Wartezeit nach dem Schritt (520) des Bereitstellens des Stoppsignals durchgeführt wird.

5. Verfahren gemäß Anspruch 1, mit einem Schritt (520) des Bereitstellens eines Stoppsignals an die Schnittstelle zu der Pumpe, um die Pumpe zu deaktivieren, einem Schritt (525) des Bereitstellens eines Ausschaltsignals an die Schnittstelle zu dem Thermoblock, um den Thermoblock zu deaktivieren und einem Schritt (605) des Ausgebens eines Anzeigesignals an eine Schnittstelle zu einer Anzeigeeinheit (117) des Getränkezubereitungsgeräts, um die Anzeigeeinheit (117) zum Anzeigen einer Aufforderung zum Eingeben eines Reinigungsmittels in das Getränkezubereitungsgerät anzusteuern.

6. Verfahren gemäß Anspruch 5, bei dem der Schritt (520) des Bereitstellens des Stoppsignals, der Schritt (525) des Bereitstellens des Ausschaltsignals und der Schritt (605) des Ausgebens des Anzeigesignals durchgeführt werden, wenn das Wasser eine Reinigungstemperatur aufweist.

7. Verfahren gemäß Anspruch 6, mit einem Schritt (610) des Einlesens eines Eingabesignals, das ein erfolgtes Eingeben des Reinigungsmittels anzeigt und mit einem weiteren Schritt (530) des Bereitstellens des Pumpsignals eine vorbestimmte Auflösezeit nach dem Schritt (610) des Einlesens des Eingabesignals, um einen Reinigungsprozess zu starten.

8. Verfahren gemäß einem der vorangegangenen Ansprüche, mit einem Schritt des Einlesens eines Temperatursignals über eine Schnittstelle zu einem Temperatursensor des Getränkezubereitungsgeräts, wobei das Temperatursignal eine Temperatur des Wassers in dem Wassertank repräsentiert.

9. Steuereinheit (240), die ausgebildet ist, um die Schritte des Verfahrens gemäß einem der vorangegangenen Ansprüche in entsprechenden Einheiten auszuführen und/oder anzusteuern.

10. Computer-Programmprodukt mit Programmcode zur Durchführung des Verfahrens nach einem der Ansprüche 1 bis 8, wenn das Computer-Programmprodukt auf einer Steuereinheit (240) gemäß Anspruch 9 ausgeführt wird.

11. Getränkezubereitungsgerät (100) zum Zubereiten zumindest eines Getränks, wobei das Getränkezubereitungsgerät (100) die folgenden Merkmale aufweist:
einen Wassertank (115) zum Bevorraten von Wasser;
eine Ausgabeeinheit (105) zum Ausgeben des Getränks;
ein Ventil (200), das ausgebildet ist, um in einer ersten Stellung eine Zuführleitung (205) zum Zuführen des Wassers aus dem Wassertank (115) zu dem Ventil (200) mit der Ausgabeeinheit (105) und in einer zweiten Stellung die Zuführleitung (205) mit einer Rückführleitung (220) zum Zurückführen des Wassers von dem Ventil (200) in den Wassertank (115) zu verbinden;
die Zuführleitung (205);
die Rückführleitung (220);
eine Pumpe (210) zum Fördern des Wassers aus dem Wassertank (115) über die Zuführleitung (205) zu dem Ventil (200); und
einen Thermoblock (215) zum Erhitzen des Wassers in der Zuführleitung (205).

12. Getränkezubereitungsgerät (100) mit der Steuereinheit (240) gemäß Anspruch 9.
